# DEMANDE DE BREVET EUROPEEN

(11) **EP 1 369 274 A1**
(43) Date de publication de la demande: **10.12.2003**
(21) Numéro de dépôt: 03291338.6
(22) Date de dépôt: 04.06.2003
(51) Int. Cl.: B60J 5/10

(54) **Structure de hayon pour véhicule automobile transformable et véhicule automobile équipé d'une telle structure de hayon**

(30) Priorité: 07.06.2002 FR 0207033
(71) Demandeur: Peugeot Citroen Automobiles SA, 78943 Vélizy-Villacoublay Cedex (FR)
(72) Inventeur: Bertrand-Belanger, Pascal, 92130 Sevres (FR)
(74) Mandataire: Lanceplaine, Jean-Claude

(57) **Abrégé**

L'invention concerne une structure de hayon (10), notamment pour véhicule automobile transformable, comportant un cadre (11) monté articulé sur un pavillon (3) et, d'une part, une partie inférieure (13) formée par un bandeau solidaire du cadre (11) et, d'autre part, une partie supérieure (14) formée d'un élément supérieur (15) et d'un élément inférieur (16) escamotables.

L'invention concerne également un véhicule automobile transformable équipé d'une telle structure de hayon.

## Description

La présente invention concerne une structure de hayon pour véhicule automobile et un véhicule automobile équipé d'une telle structure de hayon.

Certains véhicules automobiles sont munis à l'arrière d'un ouvrant appelé hayon permettant de donner accès à un coffre de rangement ou à la partie arrière de l'habitacle. De façon générale, de tels hayons présentent au niveau de leurs bords supérieurs, des moyens d'articulation sur le pavillon du véhicule automobile, de sorte qu'ils peuvent être déplacés entre une position de fermeture et une position d'ouverture, par déplacement angulaire autour de ces moyens d'articulation. C'est le cas par exemple des véhicules automobiles du type "monospace" ou break.

Ces hayons sont généralement munis d'une vitre arrière aussi appelée lunette qui, dans certains cas, peut être déplaçable entre une position d'obturation et une position d'ouverture permettant d'avoir accès facilement à certaines zones du coffre.

On connaît, par ailleurs, des véhicules automobiles à benne ouverte vers le haut appelés pick-up, qui comportent à l'arrière d'une cabine constituée par la partie antérieure de l'habitacle du véhicule renfermant le poste de conduite, la benne ouverte vers le haut de forme générale parallélépipédique.

La benne ouverte de ce type de véhicules comporte un plancher, deux parois latérales dans la direction longitudinale du véhicule et une paroi d'extrémité arrière ouvrante située à l'opposé de la cabine.

De tels véhicules présentent des avantages en ce qui concerne leur capacité de chargement par rapport à un véhicule classique ou même par rapport à un véhicule du type monospace ou break, puisque le niveau de chargement de la benne est pratiquement illimité du fait de l'absence d'un toit recouvrant ladite benne.

Enfin, les véhicules de type pick-up ne permettent pas de modifier le rapport entre le volume de chargement et celui alloué aux passagers, principalement à cause de la paroi fixe séparant l'habitacle de la benne et ils ne peuvent être utilisés qu'à des fins utilitaires et seulement par le conducteur et éventuellement un passager, ce qui limite leur intérêt dans le cas de leur utilisation par des particuliers.

L'invention a pour but de proposer une structure de hayon qui permet de transformer facilement un volume de véhicule automobile de type monospace ou monoberline en un volume de véhicule automobile de type pick-up afin de cumuler les avantages de ce genre de véhicule automobile.

L'invention a donc pour objet une structure de hayon, notamment pour véhicule automobile transformable en véhicule automobile à benne ouverte vers le haut, du type comportant un cadre monté articulé sur un pavillon du véhicule automobile, caractérisé en ce qu'il comprend, d'une part, une partie inférieure formée par un bandeau solidaire du cadre et, d'autre part, une partie supérieure formée d'un élément supérieur et d'un élément inférieur, l'élément supérieur étant déplaçable entre une position active dans laquelle il est en saillie par rapport à l'élément inférieur et une position escamotée dans laquelle il est disposé derrière l'élément inférieur et l'élément inférieur étant déplaçable entre une position active dans laquelle il est en saillie par rapport au bandeau et une position escamotée dans laquelle il est disposé avec l'élément supérieur derrière ledit bandeau.

Selon d'autres caractéristiques de l'invention,
- l'élément supérieur est déplaçable entre la position active et la position escamotée par coulissement au moyen d'au moins deux rails de guidage parallèles, fixés chacun sur la face interne de l'élément inférieur,
- l'élément supérieur est déplaçable entre la position active et la position escamotée au moyen d'au moins une charnière disposée entre le bord inférieur de l'élément inférieur et le bord supérieur du bandeau,
- l'élément supérieur forme une vitre arrière du véhicule automobile.

L'invention a également pour objet un véhicule automobile transformable comportant un habitacle contenant un poste de conduite et délimité par un plancher, un pavillon et deux parois latérales comportant chacune, à l'arrière de l'habitacle, une ouverture munie d'une vitre de custode, caractérisé en ce que l'habitacle est délimité, à sa partie postérieure, par une structure de hayon telle que précédemment mentionnée.

Selon une autre caractéristique, chaque vitre de custode est déplaçable par coulissement entre une position active d'obturation de l'ouverture correspondante et une position escamotée dans la paroi latérale.

D'autres caractéristiques et avantages de l'invention apparaîtront au cours de la description qui va suivre, donnée à titre d'exemple et faite en se référant aux dessins annexés, sur lesquels :
- la Fig. 1 est une vue schématique en perspective d'un véhicule automobile équipé d'une structure de hayon conforme à l'invention, dans la configuration du véhicule automobile en monospace ou monoberline,
- la Fig. 2 est une vue de côté du véhicule automobile montrant l'ouverture du hayon,
- la Fig.3 est une vue en perspective du véhicule automobile avec la structure de hayon conforme à l'invention, dans la configuration à benne ouverte vers le haut,
- la Fig. 4 est une vue schématique en perspective de la structure de hayon conforme à l'invention,
- les Figs. 5A à 5D sont des vues schématiques de côté de la partie arrière du véhicule automobile illustrant les transformations de la structure de hayon conforme à l'invention.

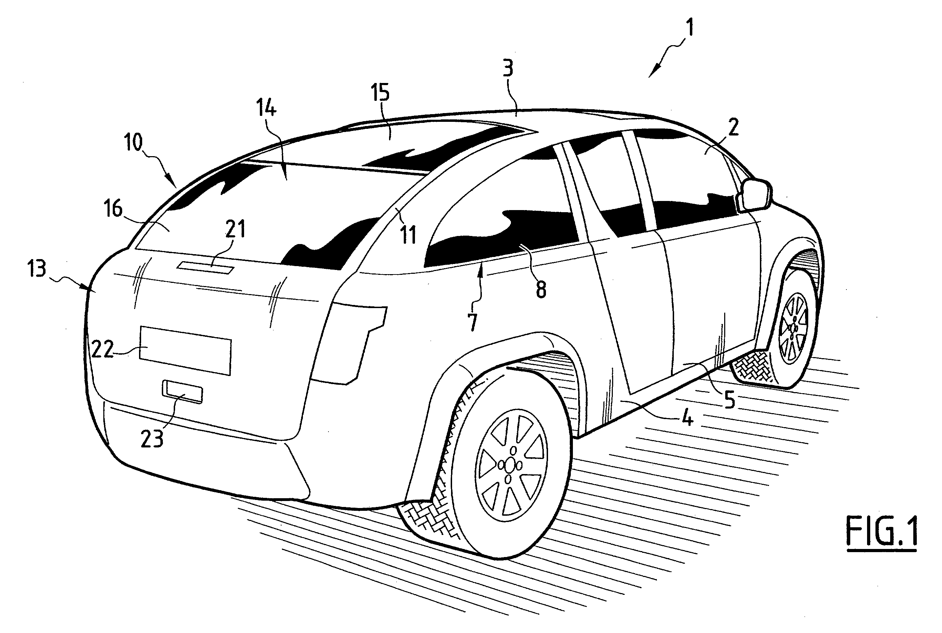

Sur les Figs. 1 à 3, on a représenté schématiquement un véhicule automobile du type monospace ou monoberline désigné de manière générale par la référence 1.

De manière classique, le véhicule 1 comporte une carrosserie délimitant un habitacle 2 contenant un poste de conduite et plusieurs rangées de sièges, non représentées. L'habitacle 2 est délimité notamment par un plancher, non représenté, un pavillon 3, deux parois latérales 4 et, à sa partie postérieure, par une structure de hayon désignée par la référence générale 10.

Chaque paroi latérale 4 comporte un ou deux ouvrants 5 pour accéder à l'habitacle 2 et, à l'arrière de cet habitacle 2, une ouverture 7 munie d'une vitre de custode 8.

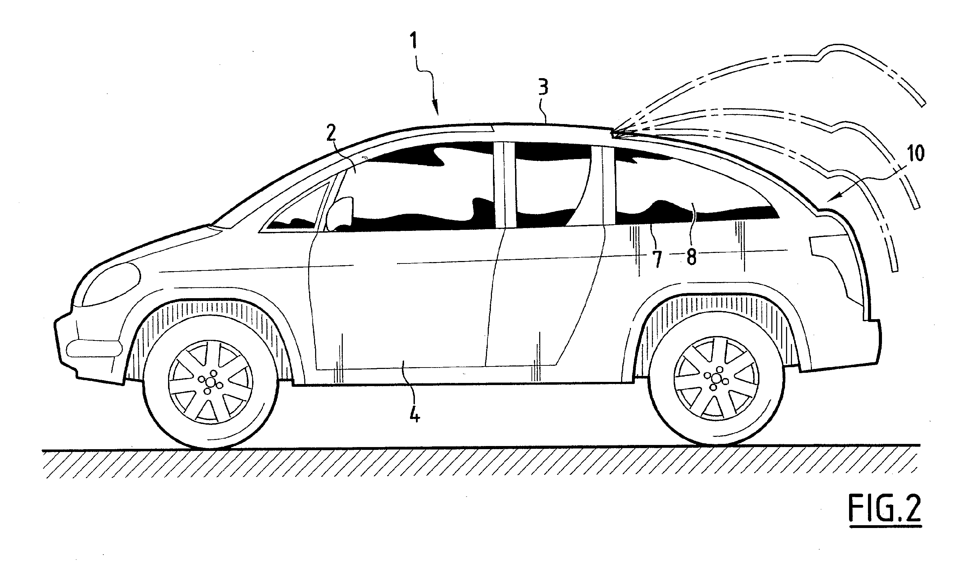

La structure de hayon 10 présente, dans sa partie supérieure, des moyens d'articulation sur le pavillon 3 de sorte que cette structure peut-être déplacée entre une position de fermeture de la partie postérieure de l'habitacle 2 et une position d'ouverture, par déplacement angulaire autour de ces moyens d'articulation, donnant accès à la partie arrière dudit habitacle, comme montré à la Fig. 2.

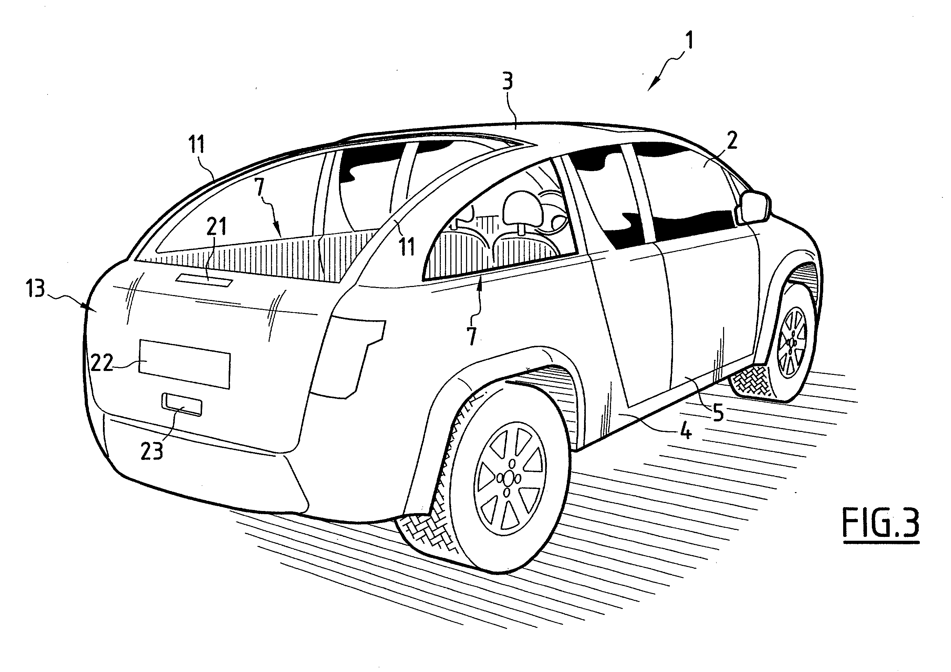

De plus, la structure de hayon 10 permet de transformer le véhicule automobile 1 entre une configuration de véhicule automobile de type monospace ou monoberline (Fig. 1) dans laquelle la partie arrière de l'habitacle 2 est fermée et une configuration de véhicule automobile à benne ouverte vers le haut de type pick-up, (Fig. 3) dans laquelle la partie arrière de l'habitacle 2 est ouverte permettant ainsi le transport d'objets encombrants.

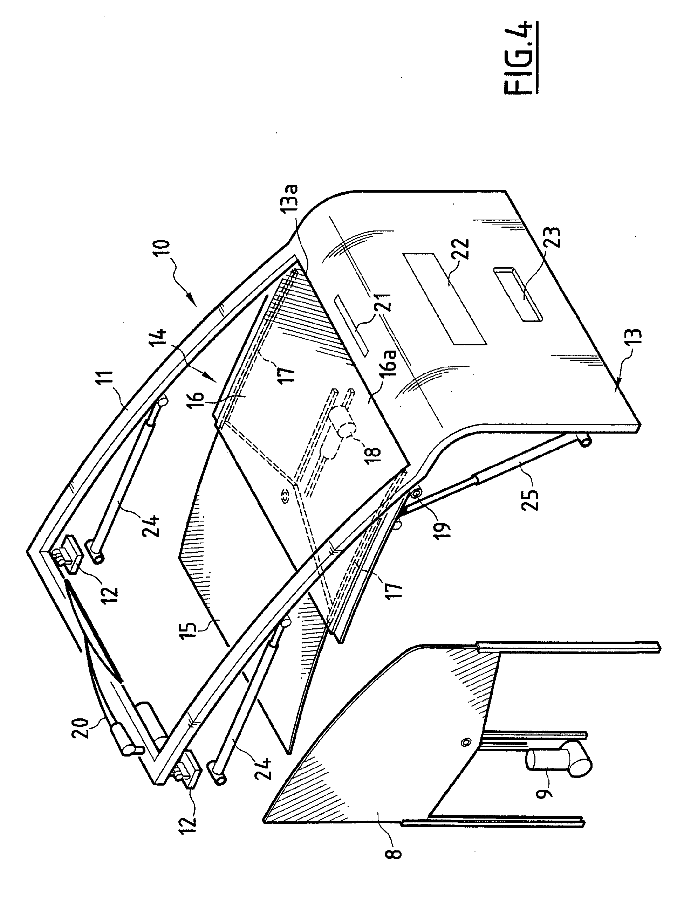

Pour cela et comme représenté à la Fig. 4, la structure de hayon 10 comprend un cadre 11 muni à sa partie supérieure de moyens d'articulation avec le pavillon 3 et qui sont constitués par exemple par deux charnières 12.

La structure de hayon 10 comprend, d'une part, une partie inférieure 13 formée par un bandeau solidaire du cadre 11 et une partie supérieure escamotable désignée par la référence générale 14.

Cette partie supérieure 14 est formée par un élément supérieur 15 et un élément inférieur 16.

L'élément supérieur 15 forme la vitre arrière du véhicule automobile et est déplaçable entre une position active dans laquelle il est en saillie par rapport à l'élément inférieur 16 et sensiblement dans le prolongement de cet élément inférieur 16 et une position escamotée dans laquelle il est disposé derrière ledit élément inférieur 16.

A cet effet, l'élément supérieur 15 est déplaçable entre la position active et la position escamotée par coulissement au moyen d'au moins deux rails de guidage 17 parallèles et fixés chacun sur la face inférieure de l'élément inférieur 16. Dans l'exemple de réalisation représenté à la Fig. 4, les rails de guidage 17 sont au nombre de trois s'étendant parallèlement les uns par rapport aux autres, deux de ces rails étant fixés chacun sur un bord latéral de l'élément inférieur 16 et un desdits rails étant fixé au centre dudit élément inférieur 16.

Le déplacement de l'élément supérieur 15 est assuré par un mécanisme d'entraînement 18, comme par exemple un mécanisme de descente de vitre couramment utilisé dans les véhicules automobiles.

L'élément inférieur 16 est constitué notamment par une plaque en matériau opaque et est déplaçable entre une position active dans laquelle il est en saillie par rapport au bandeau 13 et une position escamotée dans laquelle il est disposé avec l'élément supérieur 15 derrière ledit bandeau 13.

A cet effet, l'élément inférieur 16 est déplaçable entre la position active et la position escamotée au moyen d'au moins une charnière 19 et de préférence deux charnière 19 disposées entre le bord inférieur 16a de l'élément inférieur 16 et le bord supérieur 13a du bandeau 13.

La structure de hayon 10 comporte également un essuie-glace 20 de l'élément supérieur 15, fixé sur le bord supérieur du cadre 11, un troisième feu stop 21 fixé à la partie supérieure du bandeau 13, une plaque minéralogique 22 et une poignée de verrouillage/déverrouillage 23.

Le basculement de la structure de hayon 10 est assuré par exemple par des vérins électro-hydrauliques 24 et le basculement derrière le bandeau 13 de l'ensemble formé par des éléments supérieur 15 et inférieur 16 est assuré par exemple par des vérins électro-hydrauliques 25.

Par ailleurs, chaque vitre de custode 8 est déplaçable par coulissement entre une position active d'obturation de l'ouverture 7 correspondante et une position escamotée dans la paroi latérale 4 au moyen d'un mécanisme d'entraînement 9 (Fig. 4) de type connu.

Le changement de configuration du véhicule automobile 1 est réalisé de la façon suivante.

Dans la configuration monospace ou monoberline, la structure de hayon 10 est en position fermée et les éléments supérieur 15 et inférieur 16 sont en position déployés, comme représenté à la Fig. 1.

Pour transformer le véhicule automobile 1 en véhicule automobile à benne ouverte par le haut de type pick-up, comme représenté à la Fig. 3, l'utilisateur appuie sur sa télécommande ou sur un interrupteur situé sur la planche de bord du véhicule automobile.

Sous l'action des mécanismes d'entraînement 9, les vitres de custode 8 coulissent vers le bas à l'intérieur des parois latérales 4 du véhicule automobile. La structure du hayon 10 pivote autour des charnières 12 à l'aide des vérins 24, comme montré à la FIG. 5A.

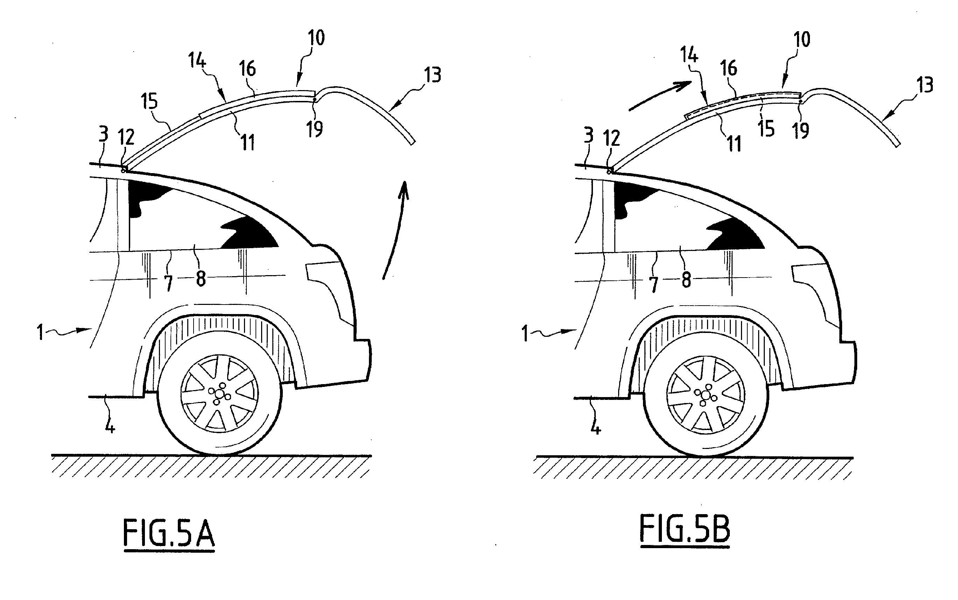

Ensuite, le mécanisme d'entraînement 18 entraîne l'élément supérieur 15 qui coulisse sur les rails de guidage 17 entre la position active et la position escamotée située derrière l'élément inférieur 16, comme montré à la Fig. 5B.

Dès que l'élément supérieur 15 est en position escamotée, l'ensemble formé par les éléments supérieur 15 et inférieur 17 pivote à son tour autour des charnières 19 par l'intermédiaire des vérins 25 et cet ensemble vient se loger derrière le bandeau 13, ainsi que représenté à la Fig. 5C.

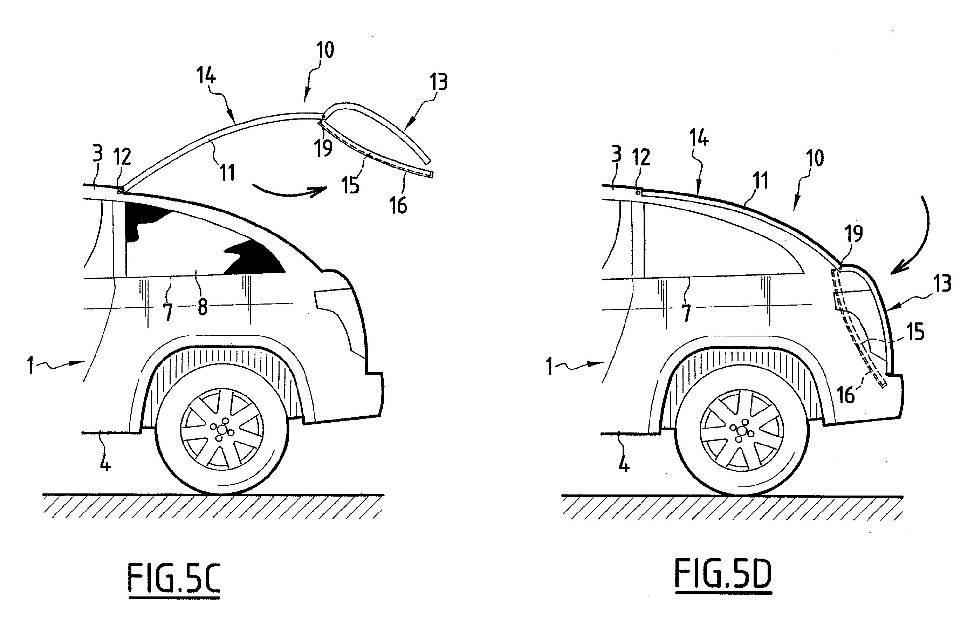

La structure de hayon 6 avec les éléments supérieur 15 et inférieur 16 en position escamotée reprend sa position initiale au moyen des vérins 24 en pivotant vers le bas autour des charnières 12, comme montré à la Fig. 5D.

Dans cette configuration représentée à la Fig. 3, le véhicule automobile 1 peut être utilisé comme un véhicule automobile de type pick-up avec la partie arrière ouverte permettant ainsi de transporter des objets volumineux dépassant de cette partie arrière, tout en permettant le transport de passagers dans de bonnes conditions de confort.

En effet, la partie avant de l'habitacle peut être séparée de la partie arrière ouverte de cette habitable par exemple par une vitre coulissant entre une position déployée de séparation et une position escamotée dans la rangée arrière de sièges.

Le véhicule automobile équipé d'une structure de hayon selon l'invention est particulièrement économique du fait de sa polyvalence et peut éviter l'achat d'un second véhicule par un utilisateur désirant effectuer des transports sur route à grande distance de charges ou de passagers, dans de bonnes conditions de confort et de protections climatiques, et des transports purement utilitaires de charges volumineuses, dans une utilisation locale.

La structure de hayon selon l'invention présente également l'avantage de pouvoir effectuer la transformation entre les deux configurations sans empiéter sur le volume de chargement si bien que le changement de configuration peut être réalisé avec un véhicule automobile chargé.

## Revendications

1. Structure de hayon, notamment pour véhicule automobile transformable en véhicule automobile à benne ouverte vers le haut, du type comportant un cadre (11) monté articulé sur un pavillon (3) du véhicule automobile, **caractérisée en ce qu'**elle comprend, d'une part, une partie inférieure (13) formée par un bandeau solidaire du cadre (11) et, d'autre part, une partie supérieure (14) formée d'un élément supérieur (15) et d'un élément inférieur (16), l'élément supérieur (15) étant déplaçable entre une position active dans laquelle il est en saillie par rapport à l'élément inférieur (16) et une position escamotée dans laquelle il est disposé derrière l'élément inférieur (16) et l'élément inférieur (16) étant déplaçable entre une position active dans laquelle il est en saillie par rapport au bandeau (13) et une position escamotée dans laquelle il est disposé avec l'élément supérieur (15) derrière ledit bandeau (13).

2. Structure de hayon selon la revendication 1, **caractérisée en ce que** l'élément supérieur (15) est déplaçable entre la position active et la position escamotée par coulissement au moyen d'au moins deux rails de guidage (17) parallèles, fixés chacun sur la face interne de l'élément inférieur (16).

3. Structure de hayon selon la revendication 1 ou 2, **caractérisée en ce que** l'élément inférieur (16) est déplaçable entre la position active et la position escamotée au moyen d'au moins une charnière (19) disposée entre le bord inférieur de l'élément inférieur (16) et le bord supérieur du bandeau (13).

4. Structure de hayon selon l'une quelconque des revendications 1à 3, **caractérisée en ce que** l'élément supérieur (15) forme une vitre arrière de véhicule automobile.

5. Véhicule automobile transformable comportant un habitacle (2) contenant un poste de conduite et délimité par un plancher, un pavillon (3), deux parois latérales (4) comportant chacune, à l'arrière de l'habitacle (2), une ouverture (7) munie d'une vitre de custode (8), **caractérisé en ce que** l'habitacle (2) est délimité, à sa partie postérieure, par une structure de hayon (10) selon l'une quelconque des revendications précédentes.

6. Véhicule automobile selon la revendication 5, **caractérisé en ce que** chaque vitre de custode (8) est déplaçable par coulissement entre une position active d'obturation de l'ouverture (7) correspondante et une position escamotée dans la paroi latérale (4).
